# DEMANDE DE BREVET EUROPEEN

(11) **EP 1 940 025 A1**
(43) Date de publication de la demande: **02.07.2008**
(21) Numéro de dépôt: 07124111.1
(22) Date de dépôt: 27.12.2007
(51) Int. Cl.: H03K 5/12

(54) **Transfert de données numériques à travers un isolement**

(30) Priorité: 28.12.2006 FR 0656034
(71) Demandeur: ST MICROELECTRONICS S.A., 92120 Montrouge (FR)
(72) Inventeur: Florence, Arnaud, 37360 Saint Antoine du Rocher (FR); Heurtier, Jérôme, 37000 Tours (FR)
(74) Mandataire: de Beaumont, Michel

(57) **Abrégé**

L'invention concerne un procédé et un système de transfert d'un signal numérique (Vin) à travers un transformateur (11), dans lequel le courant (Ip) dans un enroulement primaire (11p) du transformateur est un signal modulé en fréquence présentant des trains sinusoïdaux de durées différentes selon le front montant ou descendant du signal numérique à transférer.

## Description

### Domaine de l'invention

La présente invention concerne de façon générale les barrières d'isolement galvanique et, plus particulièrement, la transmission de signaux numériques à travers une barrière d'isolement.

### Exposé de l'art antérieur

Pour obtenir un isolement galvanique, on a généralement recours à des optocoupleurs, des coupleurs capacitifs ou des transformateurs. La présente invention s'applique plus particulièrement à un isolement à base de transformateur.

L'utilisation d'un unique transformateur attaqué directement par le signal numérique à transmettre engendre une consommation importante car, côté primaire, le transformateur est alimenté pendant tous les créneaux positifs. Une solution est d'utiliser deux transformateurs pour transmettre séparément les fronts montants et descendants, ce qui accroît l'encombrement et le coût.

### Résumé de l'invention

La présente invention vise à pallier tout ou partie des inconvénients des transformateurs connus pour transférer des signaux numériques à travers une barrière d'isolement.

Un objet vise plus particulièrement une solution ne requérant qu'un seul transformateur.

Un autre objet vise une solution à large bande passante.

Un autre objet vise une solution offrant une bonne immunité au bruit.

Pour atteindre tout ou partie de ces objets ainsi que d'autres, la présente invention prévoit un procédé de transfert d'un signal numérique à travers un transformateur, dans lequel le courant dans un enroulement primaire du transformateur est un signal modulé en fréquence présentant des trains sinusoïdaux de durées différentes selon le front montant ou descendant du signal numérique à transférer.

Selon un mode de mise en oeuvre, le signal numérique à transférer est codé pour générer des impulsions de durées différentes selon le front montant ou descendant du signal.

Selon un mode de mise en oeuvre, la période de la porteuse de modulation est choisie pour être inférieure à la durée minimale d'une impulsion.

Selon un mode de mise en oeuvre, un signal de trains sinusoïdaux récupéré côté secondaire du transformateur est démodulé pour récupérer l'enveloppe du signal comportant des impulsions de durées différentes, le signal démodulé étant décodé pour reconstituer le signal numérique.

Selon un mode de mise en oeuvre, le signal récupéré côté secondaire du transformateur est filtré au moyen d'un filtre passe-bande avant démodulation.

Selon un mode de mise en oeuvre :
un front montant du signal numérique est converti en une première impulsion d'une première durée et un front descendant du signal numérique est converti en une deuxième impulsion d'une deuxième durée, différente de la première ;
les impulsions sont modulées en fréquence avec une porteuse de période inférieure à la durée minimale d'une impulsion ; et
le signal modulé en fréquence est appliqué à l'enroulement primaire du transformateur.

Selon un mode de mise en oeuvre :
un signal prélevé au secondaire du transformateur est démodulé pour récupérer l'enveloppe des impulsions ; et
le signal démodulé est décodé pour reconstituer un signal numérique en interprétant les durées respectives des impulsions reconstituées par la démodulation.

Selon un mode de mise en oeuvre, le signal prélevé au secondaire du transformateur est, avant démodulation, filtré au moyen d'un filtre passe-bande ayant une bande passante incluant la fréquence de modulation.

Un autre objet prévoit un système de transfert d'un signal numérique à travers un transformateur, comportant :
un circuit d'entrée comportant au moins un codeur et un modulateur du signal numérique à transférer, dont la sortie est reliée à un enroulement primaire du transformateur ; et
un circuit de sortie comportant au moins un démodulateur et un décodeur du signal récupéré aux bornes d'un enroulement secondaire du transformateur.

Selon un mode de réalisation, le circuit d'entrée comporte :
un codeur générant un premier type d'impulsions à chaque front montant du signal numérique à transférer, ces impulsions étant d'une première durée, et un deuxième type d'impulsions de durée différente de la première à chaque front descendant du signal numérique ; et
un modulateur des signaux fournis par le codeur, avec une porteuse de période inférieure à la durée minimale d'une impulsion générée par le codeur.

Selon un mode de réalisation, le circuit de sortie comporte au moins :
un démodulateur ; et
un décodeur générant un front montant en présence d'une impulsion d'une première durée et un front descendant en présence d'une impulsion d'une deuxième durée, différente de la première.

Selon un mode de réalisation, le circuit de sortie comporte en outre, en amont du démodulateur, un filtre passe-bande dont la bande passante est choisie pour inclure la fréquence de la porteuse du modulateur du circuit d'entrée.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 est un schéma-bloc d'un exemple de système d'isolement du type auquel s'applique la présente invention ;
la figure 2 représente un exemple de schéma d'un transformateur d'isolement ;
les figures 3A, 3B et 3C illustrent le fonctionnement du transformateur de la figure 2 ;
la figure 4 est un schéma-bloc d'un système d'isolement usuel ;
la figure 5 est un schéma-bloc d'un autre système d'isolement usuel ;
la figure 6 représente, de façon très schématique et sous forme de blocs, un mode de réalisation d'un système de transfert selon la présente invention ;
les figures 7A, 7B, 7C, 7D, 7E et 7F illustrent, par des chronogrammes, le fonctionnement du système représenté en figure 6 ;
la figure 8 représente un exemple de réalisation d'un circuit d'entrée du système de la figure 6 ;
la figure 9 représente un exemple d'un circuit de sortie du système de la figure 6 ;
la figure 10 représente un autre exemple de circuit d'entrée du système de la figure 6 ; et
les figures 11A, 11B, 11C, 11D, 11E, 11F, 11G et 11H illustrent, par des chronogrammes, le fonctionnement du circuit d'entrée de la figure 10.

De mêmes éléments ont été désignés par de mêmes références aux différentes figures qui ont été tracées sans respect d'échelle.

### Description détaillée

Par souci de clarté, seuls les éléments utiles à la compréhension de l'invention ont été représentés et seront décrits. En particulier, les circuits amont et aval de la barrière d'isolement de l'invention, pour générer les signaux numériques et exploiter ces signaux, n'ont pas été détaillés, l'invention étant compatible avec tout système classique ayant besoin de faire transiter un signal numérique par une barrière d'isolement.

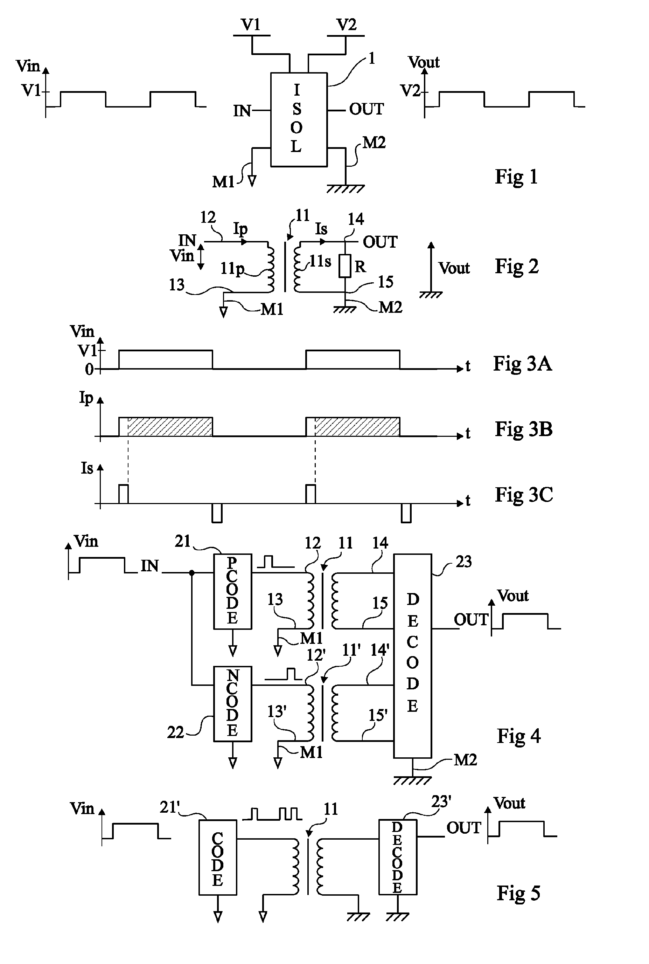

La figure 1 représente, de façon très schématique et sous forme de blocs, un exemple de système d'isolement ou isolateur 1 (ISOL) du type auquel s'applique la présente invention. Cet isolateur reçoit, sur une borne d'entrée IN, un signal numérique Vin ayant pour amplitude une première tension V1 référencée par rapport à une première masse M1. L'isolateur fournit, sur une borne de sortie OUT, un signal numérique Vout ayant pour amplitude une deuxième tension V2 référencée par rapport à une deuxième masse M2. Les amplitudes V1 et V2 peuvent être différentes ou identiques.

La figure 2 représente un exemple de schéma usuel d'un transformateur 11. Un enroulement primaire 11p du transformateur reçoit, sur une première extrémité 12, le signal Vin à convertir et a sa deuxième extrémité 13 reliée à la masse M1. Un enroulement secondaire 11s du transformateur a une première extrémité 14 définissant la borne OUT tandis qu'une deuxième extrémité 15 est reliée à la masse M2. Une résistance R de conversion courant-tension, aux bornes de laquelle est prélevé le signal Vout, relie les bornes de sortie 14 et 15.

Les figures 3A, 3B et 3C illustrent le fonctionnement du transformateur de la figure 2 pour la transmission d'un signal numérique Vin (par exemple un signal d'horloge). La figure 3A représente un exemple d'allure du signal Vin. La figure 3B illustre l'allure du courant Ip dans le primaire 11p du transformateur. La figure 3C illustre l'allure du courant Is dans le secondaire 11s. Les fronts montants du signal Vin se traduisent par des impulsions dans un premier sens (par exemple positif avec les orientations prises aux figures) sur le courant Is. Les fronts descendants se traduisent par des impulsions dans le sens inverse. Pour simplifier, les impulsions ont été représentées non perturbées. En pratique, leur forme est moins régulière que l'illustration. A partir du courant Is, un décodeur adapté est capable de reconstituer le signal d'horloge ayant traversé la barrière d'isolement.

Le montage de la figure 2 engendre une consommation importante. En effet, côté primaire, le transformateur est alimenté pendant tous les créneaux positifs alors que seuls les fronts sont exploités par le secondaire. Cette consommation inutile est illustrée en figure 3B par des hachures.

La figure 4 représente un exemple de système usuel à deux transformateurs 11 et 11' qui sont respectivement utilisés pour transmettre des fronts montants et descendants du signal d'entrée Vin. Pour cela, la borne IN de l'entrée de l'isolateur est envoyée en entrée de deux circuits de codage 21 (PCODE) et 22 (NCODE) fournissant respectivement des impulsions sur les fronts montants et descendants du signal Vin. Les sorties des circuits 21 et 22 sont connectées à des premières extrémités respectives 12 et 12' des primaires des transformateurs 11 et 11' dont les deuxièmes extrémités respectives 13 et 13' sont reliées à la masse M1. Les extrémités respectives 14, 15 et 14', 15' des enroulements secondaires des transformateurs 11 et 11' sont reliées à un circuit 23 de décodage (DECODE) fournissant, sur une borne de sortie OUT, le signal Vout référencé par rapport à la masse M2.

La figure 5 représente un autre exemple de système usuel.

Selon cet exemple, un circuit 21' (CODE) de codage du signal numérique Vin à traiter fournit, au primaire 11p d'un transformateur 11, une impulsion pour les fronts montants et une suite de deux impulsions rapprochées pour les fronts descendants. Un circuit de décodage 23' (DECODE) exploite, côté secondaire, les fronts et paires de fronts pour reconstituer le signal Vout. L'isolateur de la figure 5 requiert, côté décodage, une fenêtre d'observation déterminée pour être capable de distinguer les impulsions des fronts montants des paires d'impulsions des fronts descendants qui se traduisent, au secondaire, par des impulsions dans le même sens. La fréquence du signal numérique susceptible d'être traité, donc la bande passante du système est ainsi limitée. Un autre inconvénient de ce système est qu'il présente une mauvaise immunité au bruit en raison de la transmission impulsionnelle.

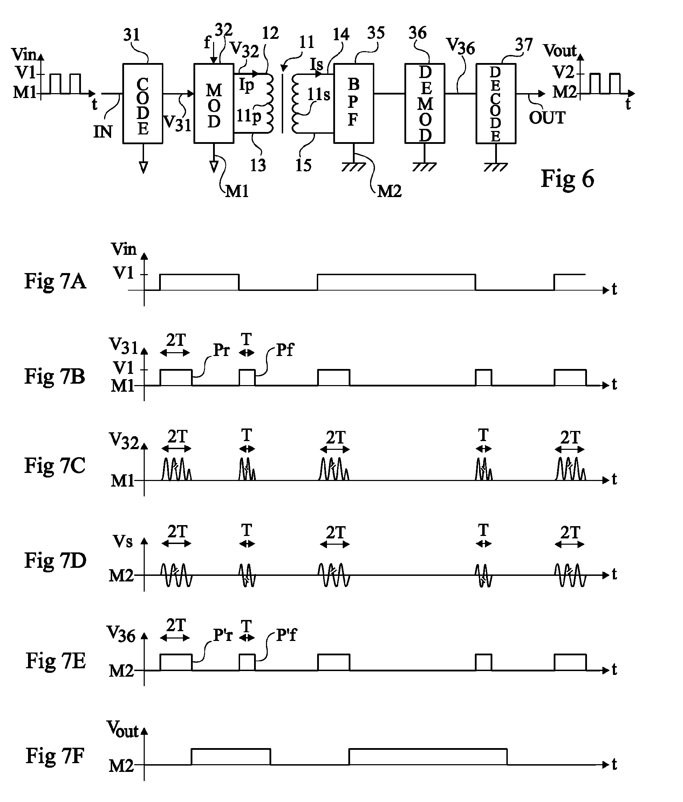

La figure 6 est un schéma-bloc d'un mode de réalisation d'un système de transfert de signaux numériques à travers une barrière d'isolement.

Une borne IN recevant un signal Vin numérique à transmettre en aval de la barrière d'isolement (transformateur) est reliée en entrée d'un codeur 31 (CODE) fournissant des impulsions d'amplitude V1, référencées à une première masse (ou potentiel de référence) M1, dont la durée est différente selon que le signal Vin présente un front montant ou un front descendant. La sortie du circuit 31 est reliée en entrée d'un modulateur 32 (MOD) chargé de transformer les impulsions en trains sinusoïdaux de durées différentes selon les fronts montants ou descendants reçus. Le modulateur 32 reçoit ou génère une porteuse de fréquence f, et fournit le signal modulé sur une première extrémité 12 d'un enroulement primaire 11p d'un transformateur 11 dont la deuxième extrémité est référencée à la masse M1.

Ainsi, l'enroulement primaire du transformateur 11 est excité par des trains sinusoïdaux dont la durée dépend du sens de front du signal numérique à transmettre.

Côté secondaire 11s du transformateur, un filtre passe-bande 35 (BPF) optionnel a son entrée reliée à une première extrémité 14 de l'enroulement 11s dont la deuxième extrémité 15 est référencée à une deuxième masse M2 correspondant au potentiel de référence du filtre passe-bande 35. La bande passante du filtre 35 est choisie pour inclure la fréquence f de la porteuse du signal transmis. Pour simplifier, les éléments (par exemple résistifs) de conversion courant-tension côté secondaire n'ont pas été illustrés en figure 6 entre l'enroulement 11s et le filtre 35. La sortie du filtre passe-bande est envoyée sur un démodulateur 36 (DEMOD) chargé de récupérer l'enveloppe du signal modulé en fréquence. Le signal de sortie V36 du démodulateur 36 est fourni à un décodeur 37 (DECODE) dont le rôle est d'interpréter les durées respectives des impulsions d'enveloppe démodulées pour fournir, sur une borne de sortie OUT du système, un signal numérique Vout d'amplitude V2 référencée par rapport à la masse M2, reproduisant le signal numérique d'entrée V1.

Les figures 7A à 7F illustrent, par des chronogrammes, le fonctionnement du système de la figure 6.

La figure 7A représente un exemple de signal Vin numérique appliqué en entrée du système. Dans cet exemple arbitraire, le signal Vin n'est pas un signal d'horloge mais un signal numérique par exemple de transmission de données.

La figure 7B illustre l'allure du signal V31 fourni par le codeur 31 qui, dans cet exemple, présente une impulsion Pr de durée 2T et d'amplitude V1 à chaque front montant du signal Vin et une impulsion Pf de durée T et de niveau V1 à chaque front descendant du signal Vin. Pour simplifier la description, on a négligé les chutes de tension par rapport aux tensions d'alimentation respectives du primaire et du secondaire, et on considère les signaux numériques comme ayant les pleines amplitudes de ces tensions d'alimentation. De même, on a négligé les temps de propagation des signaux.

Le choix d'une durée double pour les impulsions Pr des fronts montants par rapport aux impulsions Pf des fronts descendants n'est qu'un exemple, tout autre rapport (inférieur ou supérieur à l'unité) pourra être choisi en fonction du circuit de décodage utilisé en aval du système, pourvu que ces durées d'impulsions soient différentes pour les fronts montants et pour les fronts descendants.

La figure 7C représente l'allure du signal V32 fourni par le modulateur 32 et envoyé sur le primaire 11p du transformateur 11. Pour chaque impulsion Pr du signal V31, le modulateur 32 fournit un train sinusoïdal de durée 2T alors qu'il fournit un train sinusoïdal de durée T pour chaque impulsion Pf. Ces impulsions transitent à travers la barrière d'isolement constituée par le transformateur 11. La porteuse peut être quelconque pourvu que sa période soit inférieure à la période minimale des impulsions.

La figure 7D illustre l'allure de la tension Vs récupérée côté secondaire 11s du transformateur 11. Le signal Vs comprend des trains sinusoïdaux autour de la masse M2 avec des durées respectives différentes 2T et T, reproduisant ainsi le signal V32.

La figure 7E représente l'allure du signal V36 en sortie du démodulateur 36. Ce signal récupère l'enveloppe du signal modulé Vs et reproduit donc l'équivalent du signal V31 avec des durées d'impulsions P'r et P'f différentes (respectivement 2T et T).

La figure 7F représente l'allure du signal Vout référencé par rapport à la masse M2. Le décodeur 37 interprète les durées respectives des impulsions P'r et P'f pour reconstituer le signal numérique envoyé. En figure 7F, un décalage temporel a été illustré entre le signal V36 et le signal Vout. Selon la constitution du décodeur 37, ce décalage temporel peut permettre d'attendre au moins une durée T pour distinguer une impulsion de durée T d'une impulsion de durée 2T.

Un avantage de la présente invention est qu'un seul transformateur suffit pour réaliser l'isolement galvanique.

Un autre avantage est que la transmission de signaux sinusoïdaux à travers le transformateur confère une bonne immunité au bruit.

Un autre avantage est que le décodage du signal reçu exploite des durées d'impulsions et non, comme dans le mode de réalisation classique de la figure 5, un nombre d'impulsions. Cela simplifie la constitution du décodeur et autorise une bande passante plus importante. Par exemple, la fréquence f peut être de plusieurs gigahertz.

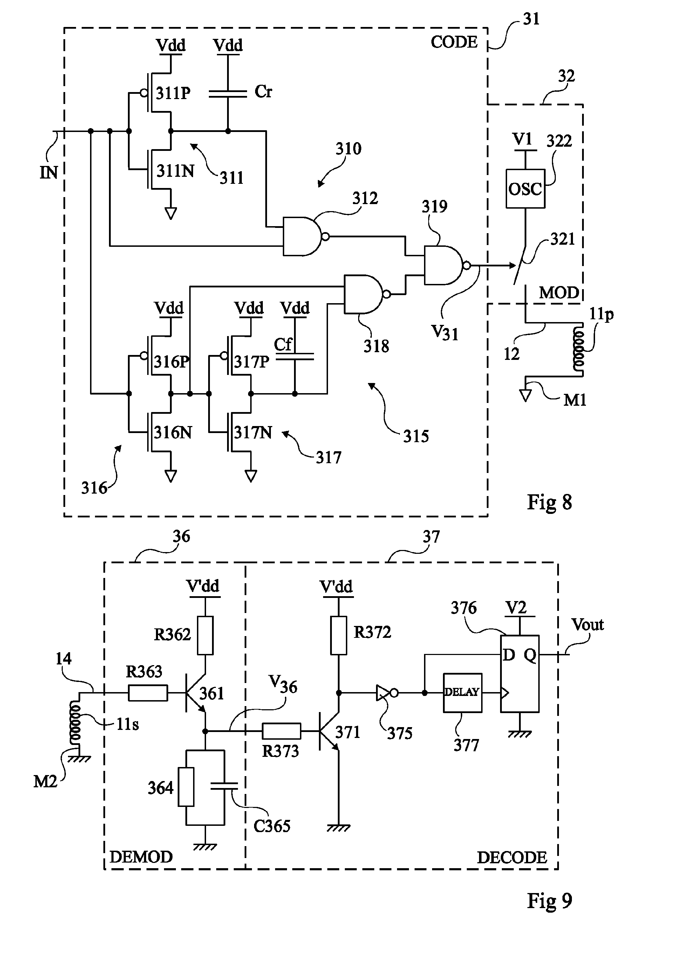

La figure 8 représente un exemple de circuit d'entrée d'un système tel que représenté en figure 6.

Le codeur 31 inclut un circuit 310 de génération des impulsions Pr sur fronts montants du signal Vin d'entrée et un circuit 315 de génération des impulsions Pf sur fronts descendants. Le circuit 310 comporte un inverseur 311 (par exemple, un inverseur CMOS formé d'une paire de transistors 311P à canal P et 311N à canal N) dont l'entrée est reliée à l'entrée IN et dont la sortie est reliée à une première entrée d'une porte logique de type NON-ET 312 dont une deuxième entrée est reliée à l'entrée IN. Un élément capacitif Cr relie la sortie de l'inverseur 311 au potentiel haut d'alimentation (par exemple, un potentiel Vdd identique ou non au potentiel V1). Le circuit 315 comporte deux inverseurs 316 et 317 (par exemple, deux inverseurs CMOS formés chacun d'une paire de transistors 316P ou 317P à canal P et 316N ou 317N à canal N) en série entre l'entrée IN et une première entrée d'une porte logique de type NON-ET 318 dont une deuxième entrée est reliée en sortie du premier inverseur 316. Un élément capacitif Cf relie la sortie de l'inverseur 317 au potentiel Vdd. Les sorties des portes 312 et 318 sont combinées par une porte de type NON-ET qui fourni le signal V31.

Les valeurs des éléments capacitifs Cr et Cf sont différentes l'une de l'autre pour que les durées des impulsions Pr et Pf soient différentes. La sortie de la porte 312 commute à l'état bas à l'apparition d'un front montant du signal Vin (ses deux entrées étant à l'état haut) et y reste jusqu'à ce que la décharge de l'élément Cr dans le transistor 311N (à l'état passant tant que le signal Vin est à l'état haut) soit suffisante pour le basculement de la porte 312. La sortie de la porte 318 reste à l'état haut pendant toute la durée où le signal Vin est à l'état haut. A l'apparition d'un front descendant du signal Vin, la sortie de la porte 318 commute à l'état bas (ses deux entrées étant à l'état haut) et y reste jusqu'à ce que la décharge de l'élément Cf dans le transistor 317N (à l'état passant tant que le signal Vin est à l'état bas) soit suffisante pour le basculement de la porte 318. La porte 319 combine les impulsions générées par les portes 312 et 318 en les inversant.

Le signal V31 commande un interrupteur 321 intercalé entre une sortie d'un oscillateur 322 fournissant la porteuse de modulation et la borne 12 de l'enroulement 11p.

La figure 9 représente un exemple de réalisation d'un circuit de sortie côté secondaire du système de la figure 6.

Le démodulateur 36 inclut un transistor 361 (par exemple, un transistor bipolaire de type NPN) dont le collecteur est relié par une résistance de polarisation R362 à une borne d'application d'un potentiel haut V'dd d'alimentation (identique ou non au potentiel V2) et dont la base est reliée, par une résistance R363 de conversion tension-courant, à la borne 14. L'émetteur du transistor 361 est relié à la masse M2 par une résistance R364 en parallèle avec un élément capacitif C365. L'élément capacitif C365 est choisi pour que la constante de temps qu'il engendre avec la résistance R364 permette la récupération de l'enveloppe de la modulation. L'émetteur du transistor 361 fournit le signal V36 et est relié, par une résistance R372, à la base d'un transistor 371 (par exemple un transistor bipolaire de type NPN) de mise en forme dont l'émetteur est relié à la masse et dont le collecteur est relié, par une résistance R372, à la borne d'application du potentiel V'dd. Le collecteur du transistor 371 qui constitue la sortie de l'étage de mise en forme est relié à l'entrée d'un inverseur 375 dont la sortie est reliée d'une part à l'entrée de donnée D d'une bascule 376 de type D et d'autre part, par l'intermédiaire d'un circuit retardateur 377 (DELAY), à l'entrée d'horloge de cette bascule 376. La sortie Q de la bascule 376 fournit le signal Vout. Le retard apporté par l'élément 377 est choisi pour être compris entre les durées des impulsions P'r et P'f du signal V36, de façon à garantir un chevauchement temporel des signaux de sortie de l'inverseur 375 et du retardateur 377 lors de l'impulsion la plus longue P'r (ou P'f) et une absence de chevauchement lors de l'impulsion la plus courte P'f (ou P'r).

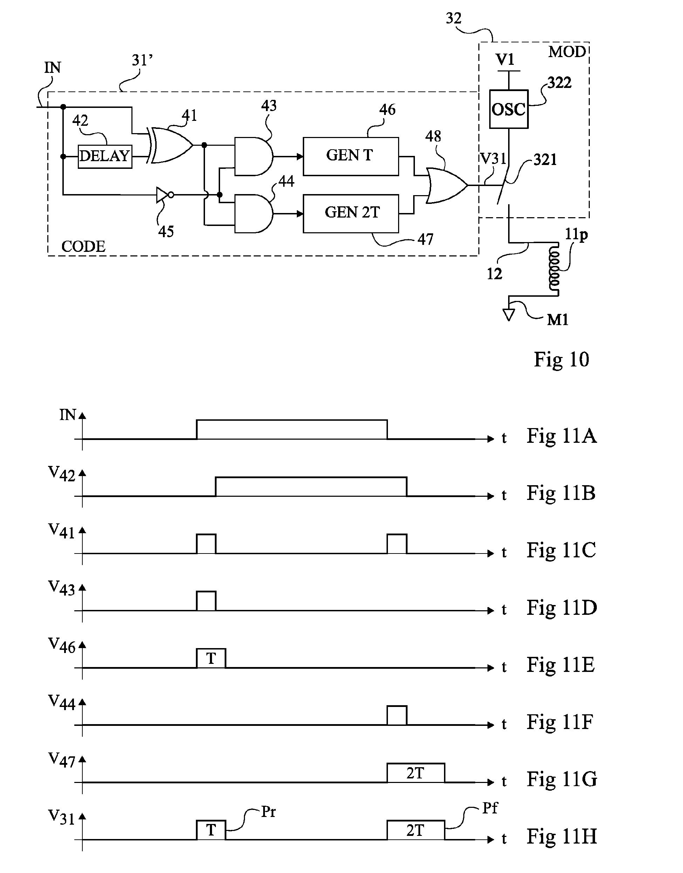

La figure 10 représente un autre exemple de circuit d'entrée (codeur + modulateur) d'un système tel que représenté en figure 6.

Les figures 11A à 11H sont des chronogrammes de signaux illustrant le fonctionnement du codeur de la figure 10. La figure 11A représente un exemple de signal IN à transmettre. Les figures 11B à 11G représentent les allures correspondant à différents points du codeur. La figure 11H représente le signal d'impulsions (Pr, Pf) de durées différentes selon le front montant ou descendant du signal à transmettre. Dans cet exemple, la durée la plus longue est associée aux fronts descendants.

Le signal IN (figure 11A) à transmettre traverse un codeur 31' chargé de séparer les fronts montants des fronts descendants et de générer des impulsions de durées différentes selon ces fronts. Le signal V31 (figure 11H) comportant des impulsions Pr et Pf d'une première durée (T) pour les fronts montants du signal IN et d'une deuxième durée (2T) pour les fronts descendants de ce signal IN est utilisé, par exemple, pour commander un modulateur 32 du type de celui illustré en figure 8.

Dans le codeur 31', une porte logique 41 de type OU-Exclusif reçoit sur une première entrée le signal IN et sur une deuxième entrée un signal V42 (figure 11B) fourni par un élément retardateur 42 (DELAY) recevant en entrée le signal IN. La sortie de la porte 41 fournit un signal V41 (figure 11C) et est reliée à des premières entrées respectives de deux portes logiques de type ET 43 et 44. Le signal V41 comporte une impulsion à chaque front du signal IN. Les deuxièmes entrées respectives des portes 43 et 44 reçoivent l'inverse du signal IN (inverseur 45). Par conséquent, le signal V43 (figure 11D) de sortie de la porte 43 comporte une impulsion à chaque front montant du signal IN et le signal V44 (figure 11F) de sortie de la porte 44 comporte une impulsion à chaque front descendant du signal IN. Les sorties respectives des portes 43 et 44 sont traitées par des générateurs d'impulsions 46 et 47 de durées respectives T et 2T. N'importe quel type de générateur d'impulsions de durée déterminée convient. Les sorties respectives V46 (figure 11E) et V47 (figure 11G) des générateurs 46 et 47 sont combinées par une porte logique 48 de type OU dont la sortie fournit le signal V31 (figure 11H).

Bien entendu, la présente invention est susceptible de diverses variantes et modifications qui apparaîtront à l'homme de l'art. En particulier, le choix de la fréquence et des durées à utiliser dépend de l'application et des constitutions possibles des circuits d'entrée et de sortie. D'autres réalisations des circuits d'entrée et de sortie pourront être envisagées, pourvu de respecter l'obtention d'un signal d'attaque de l'enroulement primaire ayant des trains d'impulsions d'une première longueur pour les fronts montants et d'une deuxième longueur pour les fronts descendants. De plus, bien que l'invention ait été décrite en relation avec des signaux positifs par rapport aux masses, l'inverse est bien entendu possible en adaptant les différents circuits.

## Revendications

1. Procédé de transfert d'un signal numérique (Vin) à travers un transformateur (11), dans lequel le courant (Ip) dans un enroulement primaire (11p) du transformateur est un signal modulé en fréquence associant des premiers trains sinusoïdaux à des fronts montants et des seconds trains sinusoïdaux à des fronts descendants, les premiers et deuxièmes trains ayant des durées différentes (2T, T).

2. Procédé selon la revendication 1, dans lequel le signal numérique à transférer (Vin) est transformé (31) en des impulsions (Pr, Pf) de durées différentes selon le front montant ou descendant du signal à transférer.

3. Procédé selon l'une quelconque des revendications 1 et 2, dans lequel la période de la porteuse de modulation (f) est choisie pour être inférieure à la durée minimale d'une impulsion.

4. Procédé selon l'une quelconque des revendications 1 à 3, dans lequel un signal de trains sinusoïdaux récupéré côté secondaire (11s) du transformateur (11) est démodulé (36) pour récupérer l'enveloppe du signal comportant des impulsions (P'r, P'f) de durées différentes, le signal démodulé étant décodé (37) pour reconstituer le signal numérique.

5. Procédé selon la revendication 4, dans lequel le signal récupéré côté secondaire (11s) du transformateur (11) est filtré (35) au moyen d'un filtre passe-bande avant démodulation (36).

6. Procédé selon l'une quelconque des revendications 1 à 5, dans lequel :
un front montant du signal numérique (Vin) est converti (31) en une première impulsion (Pr) d'une première durée et un front descendant du signal numérique est converti en une deuxième impulsion (Pf) d'une deuxième durée (T), différente de la première ;
les impulsions sont modulées en fréquence (32) avec une porteuse de période inférieure à la durée minimale d'une impulsion ; et
le signal modulé en fréquence est appliqué à l'enroulement primaire (11p) du transformateur.

7. Procédé selon la revendication 6, dans lequel :
un signal prélevé au secondaire (11s) du transformateur (11) est démodulé (36) pour récupérer l'enveloppe des impulsions ; et
le signal démodulé est décodé (37) pour reconstituer un signal numérique (Vout) en interprétant les durées respectives des impulsions (P'r, P'f) reconstituées par la démodulation.

8. Procédé selon la revendication 7, dans lequel le signal prélevé au secondaire (11s) du transformateur (11) est, avant démodulation, filtré au moyen d'un filtre passe-bande (35) ayant une bande passante incluant la fréquence de modulation (f).

9. Système de transfert d'un signal numérique (Vin) à travers un transformateur (11) comprenant un seul enroulement primaire (11p) et un seul enroulement secondaire (11s), **caractérisé en ce qu'**il comporte :
un circuit d'entrée comportant au moins un codeur (31) et un modulateur (32) du signal numérique à transférer, dont la sortie est reliée à une borne de l'enroulement primaire (11p) du transformateur ; et
un circuit de sortie comportant au moins un démodulateur (36) et un décodeur (37) du signal récupéré aux bornes de l'enroulement secondaire (11s) du transformateur.

10. Système selon la revendication 9, dans lequel le circuit d'entrée comporte :
un codeur (31) générant un premier type d'impulsions (Pr) à chaque front montant du signal numérique à transférer, ces impulsions étant d'une première durée (2T), et un deuxième type d'impulsions (Pf) de durée (T) différente de la première à chaque front descendant du signal numérique ; et
un modulateur (32) des signaux fournis par le codeur, avec une porteuse de période inférieure à la durée minimale d'une impulsion générée par le codeur.

11. Système selon l'une quelconque des revendications 9 et 10, dans lequel le circuit de sortie comporte au moins :
un démodulateur (36) ; et
un décodeur (37) générant un front montant en présence d'une impulsion (P'r) d'une première durée (2T) et un front descendant en présence d'une impulsion (P'f) d'une deuxième durée (T), différente de la première.

12. Système selon la revendication 11, dans lequel le circuit de sortie comporte en outre, en amont du démodulateur, un filtre passe-bande (35) dont la bande passante est choisie pour inclure la fréquence (f) de la porteuse du modulateur (32) du circuit d'entrée.
